# EUROPÄISCHE PATENTSCHRIFT

(11) **EP 1 829 635 B1**
(45) Veröffentlichungstag und Bekanntmachung des Hinweises auf die Patenterteilung: **11.03.2009**
(21) Anmeldenummer: 07010335.3
(22) Anmeldetag: 19.07.2002
(51) Int. Cl.: B23B 27/16

(54) **Schneidplatte mit ringförmiger Spannmulde**
Cutting insert comprising an annular clamping depression
Plaquette de coupe comprenant un creux de serrage annulaire

(30) Priorität: 26.07.2001 DE 10136635; 26.02.2002 DE 10208266
(43) Veröffentlichungstag der Anmeldung: 05.09.2007
(62) Teilanmeldung aus: 02764523.3
(73) Patentinhaber: CeramTec AG, 73207 Plochingen (DE)
(72) Erfinder: Eder, Otto, 73257 Köngen (DE); Zitzlaff, Wolfgang, 73230 Kirchheim/Teck (DE)
(74) Vertreter: Scherzberg, Andreas Hans

(56) Entgegenhaltungen:
- EP-A1- 0 753 366
- DE-A1- 1 602 817

## Beschreibung

Die Erfindung betrifft eine Schneidplatte nach dem Oberbegriff des Anspruchs 1 (siehe DE-A- 1 602 817).

Stand der Technik für einen Schneideinsatz, hier Wendeschneidplatte aus Keramik, sind Schneidplatten mit glatter Oberfläche oder mit verschiedensten Spannmulden, die gespannt in einem Trägerwerkzeug zur Zerspanung von metallischen Werkstoffen eingesetzt werden. Nachteile dieser Technik bei glatten Schneidplattenoberflächen ist die zur Spannkraft fehlende formschlüssige Verbindung zum Trägerwerkzeug. Bei Schneidplatten mit Spannmulde ist zwar zusätzlich eine formschlüssige Verbindung vorhanden, die Schneidplatte wird durch das Spannen in der Spannmulde jedoch von den Spannelementen kräftemäßig sehr stark auf einer relativ kleinen Fläche belastet, was zu Spannungen in der Schneidplatte oder gar Brüchen führen kann. Weiterhin sind bei den heute bestehenden Spannsystemen nicht alle möglichen positiven Faktoren in einem System vereinigt.

Aus der EP 0 753 366 B1 ist ein spanabhebendes Schneidwerkzeug bekannt, bestehend im wesentlichen aus einem Trägerwerkzeug, das eine Ausnehmung zur Aufnahme einer Schneidplatte aufweist, wobei die Schneidplatte mit einer Spannmulde versehen ist, die von einer Spannpratze im Trägerwerkzeug gehalten ist und die Spannpratze über eine Spannschraube auf dem Trägerwerkzeug festliegt. An der Spannpratze ist ein Druckstück angeordnet, das auf der zur Schneidplatte gewandten Unterseite mit einem Nocken versehen ist, der mit der Spannmulde in spannender Berührung steht. Weiterhin zieht die Spannpratze das Druckstück in Richtung Spannschraube.

Der Erfindung liegt die Aufgabe zu Grunde mit einfachen Komponenten so viele positive Faktoren in einem System zu vereinigen wie möglich und durch deren Zusammenspiel eine optimale Spannsituation zu erzielen. Dabei sollen die Fertigungstoleranzen der verschiedenen Bauteile kompensiert werden, eine zusätzliche formschlüssige Verbindung mit kontrollierter Spannkraftbegrenzung entstehen und ein den Zerspanungskräften entgegenwirkende Gestaltung der Bauteile zu Grunde liegen, um einen Spannkraftverlust während des Einsatzes zu vermeiden.

Erfindungsgemäß wird diese Aufgabe durch die Merkmale des Anspruchs 1 gelöst.

Erfindungsgemäß ist die Spannmulde kreisförmig ausgebildet und weist in der Mitte eine kugel- bzw: kreisförmige Erhebung auf, deren höchster Punkt unterhalb der Schneidplatten oberseite liegt.

Die erfindungsgemäße Schneidplatte ist in dem anschließend beschriebenen Schneidwerkzeug verwendbar.

Zweckmäßig ist die Ausbildung als Wendeschneidplatte.

Weitere Merkmale der Erfindung ergeben sich aus den Figuren, die nachfolgend beschrieben sind. Es zeigt:
- Fig. 1: eine Ansicht einer erfindungsgemäßen Schneidplatte,
- Fig. 2: eine Ansicht des Schneidwerkzeugs mit eingesetzter Schneidplatte,
- Fig. 3: das Schneidwerkzeug gemäß Fig. 2 in Explosionsdarstellung,
- Fig. 4: das Schneidwerkzeug gemäß Fig. 2 im Schnitt,
- Fig. 5: eine Vergrößerung des Zusammenspiels von Spannpratze-Druckstück-Schneidplatte,
- Fig. 6: ein Schnitt durch eine Spannmulde,
- Fig. 7: eine Ansicht der Oberseite eines Druckstückes,
- Fig. 8: eine Ansicht der Unterseite eines Druckstückes,
- Fig. 9: eine Ansicht einer Spannpratze und
- Fig. 10: ein vergrößerter Schnitt Spannpratze-Druckstück-Schneidplatte.

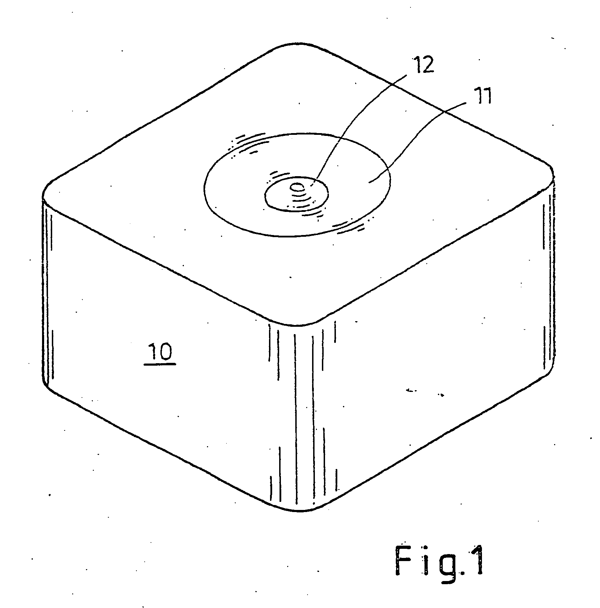

Fig. 1 zeigt einen Schneideinsatz bzw. eine Schneidplatte 10 als Wendeschneidplatte für die spanabhebende Bearbeitung von metallischen Werkstücken. Die Schneidplatte 10 weist in der Mitte eine kreisförmige Spannmulde 11 auf, wobei wiederum in deren Mitte eine kugel- bzw. kreisförmige Erhebung 12 platziert ist. Diese Spannmulde 11 und Erhebung 12 sollen zur Fixierung der Schneidplatte in einer passenden Aufnahme, hier Plattensitz genannt, auf einem geeigneten Trägerwerkzeug dienen.

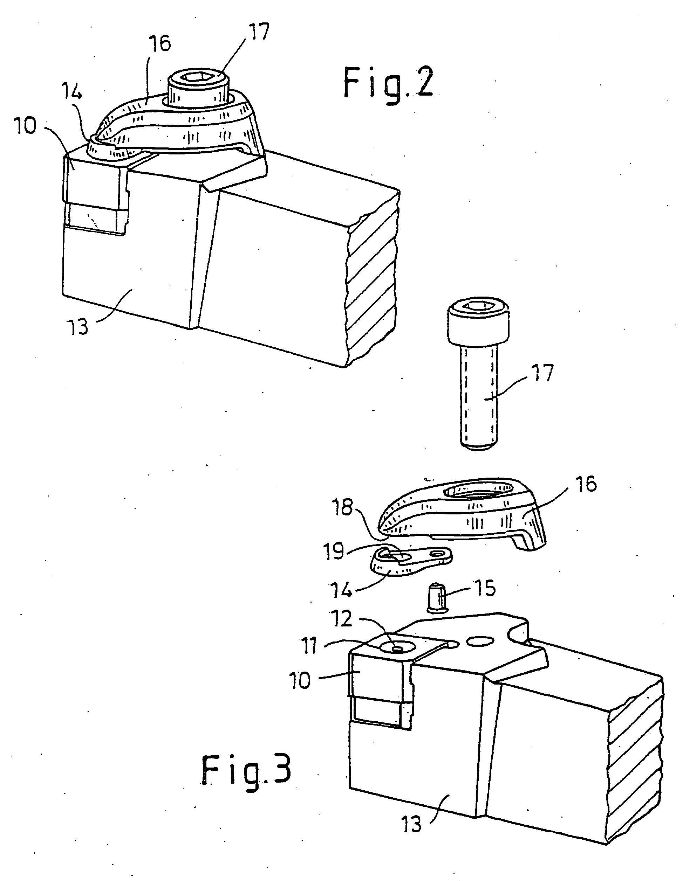

Fig. 2 zeigt die räumliche Darstellung der beschriebenen Schneidplatte 10 im gespannten Zustand auf einem Trägerwerkzeug 13. Besonderes Augenmerk ist hierbei auf das Druckstück 14 (siehe auch Fig. 3) zu richten, welches an der Unterseite die Gegenform zur vorher beschriebenen Spannmulde in der Schneidplatte aufweist. Die durch Anziehen der Spannschraube 17 entstehende Spannkraft wird über die Spannpratze 16 auf die Schneidplatte 10 übertragen. Als besonderes Merkmal besitzt die Spannpratze auf der über der Schneidplatte befindlichen Unterseite eine kugelförmige Erhebung 18, die in eine kugelförmige Vertiefung 19 in das Druckstück 14 hineinragt und mit der Schraube 15 mit Spiel befestigt ist.

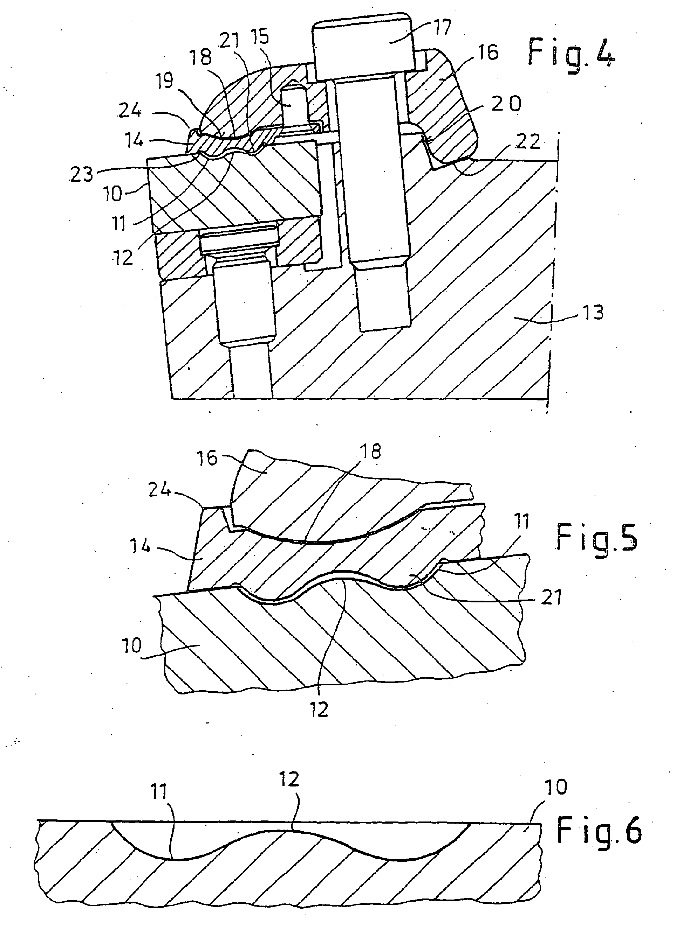

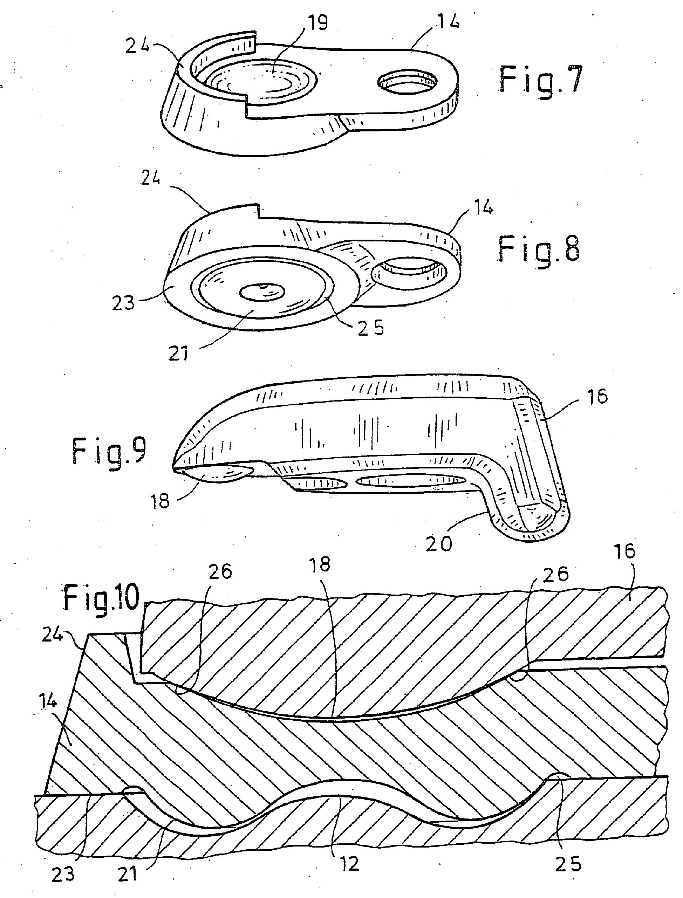

Fig. 4 zeigt einen Querschnitt durch den Plattensitz, in dem das Zusammenspiel der Spannelemente beschrieben werden soll. Beim Anziehen der Spannschraube 17 bewegt sich die Spannpratze 16 nach unten und gleitet mit der Schrägen 20 an einer ähnlichen Schrägen im Trägerwerkzeug gleichzeitig nach hinten. Da die Spannpratze über die kugelförmige Erhebung 18, an der der Schrägen gegenüberliegenden Seite durch die entstehende Spannkraft mit dem Druckstück 14 formschlüssig durch die kugelförmige Vertiefung 19 verbunden ist, und die Erhebung 21 des Druckstückes wiederum formschlüssig in die Mulde der Schneidplatte eingreift, wird die seitwärts in die Plattensitzecke gerichtete Bewegung durch die einzelnen Spannelemente auf die Schneidplatte übertragen. Siehe dazu auch Fig. 10. Beim Erreichen der Spannkraftbegrenzung 22 vergrößert sich die Hebelbewegung der Spannpratze. Das Druckstück 14 übt einen noch größeren Druck auf die Schneidplatte aus und presst nun noch zusätzlich mit seiner Auflagefläche 23 auf die Oberfläche der Schneidplatte. Das herausragende Merkmal dieses Zusammenspieles ist, das in Kombination aller Elemente ein Herauswandern der Schneidplatte aus ihrem Plattensitz durch die vorhandenen Formen und Schrägen nicht mehr möglich ist.

Fig. 5 zeigt noch einmal eine Vergrößerung des Spannpratzen-Druckstück-Schneidplatten Zusammenspieles.

Fig. 6 zeigt einen Schnitt durch die kreisförmige Mulde 11 der Schneidplatte. In deren Mitte ist die kreisförmige - bzw. kugelförmige Erhebung 12 zu erkennen. Besonders Merkmal ist hierbei, dass die Erhebung 12 die Form einer Kugel hat und oberhalb des Muldenbodens und unterhalb der Schneidplattenoberfläche liegt. Die Muldenkontur ist im Querschnitt kreisförmig und verläuft gewissermaβen um die senkrechte Achse der Kugel, was an die Backform des amerikanischen Donuts erinnert.

In Fig. 7 ist die Oberseite des Druckstückes 14 dargestellt, die als besonderes Merkmal die beschriebene Kalotte 19 bzw. kugelförmige Einsenkung oder Vertiefung aufweist.

In Fig. 8 ist die Unterseite des Druckstückes 14 dargestellt, die als besonderes Merkmal eine Erhebung 21, Donut-Form aufweist, die die Gegenform der Spannmulde auf der Schneidplatte ist. Zusätzliche Merkmale sind die Auflagefläche 23, die zur Donut-Mitte hin in einem Winkel ansteigt, und die Freilegung 25, die die Muldenkante der Schneidplatte vor Flächenberührung und damit Beschädigungen und unzureichenden Sitz schützen soll. Siehe hierzu auch Fig. 10.

Eine weitere Besonderheit des Druckstückes ist seine Beschaffenheit aus einem verschleißfestem Material wie Hartmetall, HSS oder Keramik und die Erhöhung 24 der Außenkontur zum Schutz der Spannpratze vor den Spänen, die sich bei der Zerspannung bilden (siehe Fig. 7). Die Kugel/Kalottenverbindung dient auch zum Toleranz- und Lageausgleich zwischen dem Spannelement und der Schneidplatte.

Fig. 9 zeigt die Unterseite der Spannpratze mit der beschriebenen kugelförmigen Erhebung 18. Besonderes Merkmal dieser Kugel ist außerdem, dass der Durchmesser der Kugel etwas größer ist als der Durchmesser der Kalotte im Druckstück 14, um die Kraftübertragung über die Kugel/Kalottenaußenkanten 26, siehe Fig. 10, zu ermöglichen und nicht über eine punktförmige Belastung am Kalottenboden und der Kugelspitze. Ein weiteres Merkmal ist die Schräge 20 an der Spannpratze (siehe Fig. 4 und Fig. 9), die über eine Schräge im Trägerwerkzeug führt. Diese Schrägen haben den Effekt, dass beim Anziehen der Spannschraube eine seitliche Bewegung der Spannelemente erfolgt, die die Schneidplatte in die Ecke des Plattensitzes ziehen soll. Diese Spannpratze ist für Trägerwerkzeuge mit kleineren Abmessungen bestimmt.

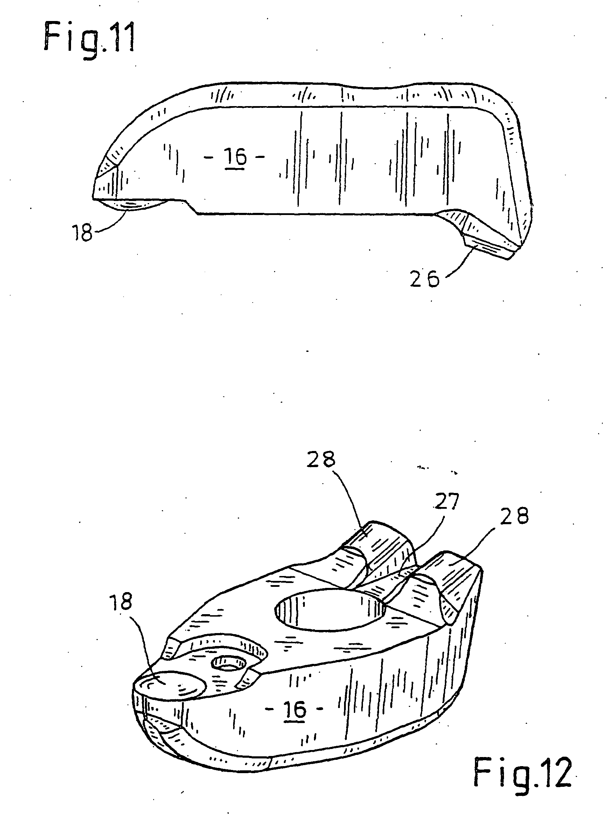

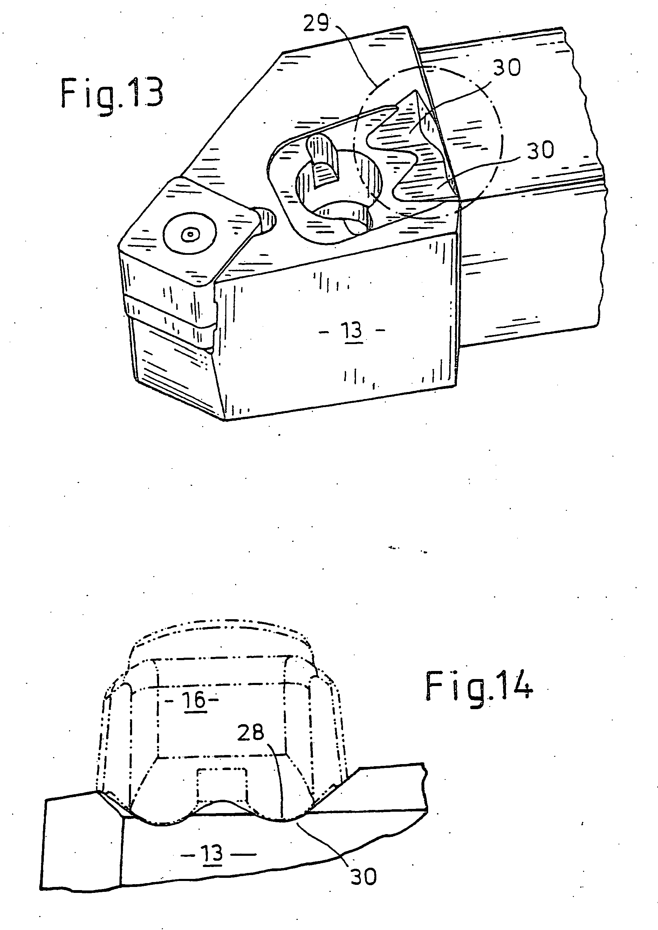

Fig. 11 zeigt die Unterseite einer weiteren Variante der Spannpratze 16 mit der beschriebenen kugelförmigen Erhebung 18. Diese Spannpratze 16 ist für Trägerwerkzeuge bestimmt, deren Abmessungen den Einbau dieses, durch seine Bauart, größeren Elementes zulässt. Besonderes Merkmal dieser Spannpratze ist die im hinteren Bereich gegenüber Fig. 9 anders geformte Schräge 26. Sie verläuft wie in Fig. 12 zu sehen durch einen Schlitz 27 getrennt, unter einem winkel von 10° bis 45°. Die beiden Schrägen 26 haben zylindrische Oberflächen 28. Diese haben den Effekt, dass beim Anziehen der Spannschraube zusätzlich zur seitlichen Bewegung der Spannpratze eine Selbstzentrierung in einer eigens dafür erzeugten Ausnehmung 29 auf dem entsprechenden Trägerwerkzeug 13 erfolgt. Siehe hierzu Fig. 13.

Das besondere Merkmal der Ausnehmung 29 auf dem Trägerwerkzeug 13 in Fig. 13 ist wiederum die zylindrische Oberfläche der parallel verlaufenden zwei Schrägen 30, die in ihrem Radius etwas größer ausgelegt sind, als die zylindrischen Oberflächen 28 der Spannpratze. Dieses ermöglicht somit eine annähernde Linienberührung zwischen den Schrägen und ein selbstzentrierendes Entlanggleiten der sich berührenden Zylindermantelflächen 28 und 30. Fig. 14 zeigt dieses Zusammenspiel von Spannpratze und Trägerwerkzeug im Querschnitt.

## Patentansprüche

1. Schneidplatte mit einer Spannmulde (11), wobei die Spannmulde (11) kreisförmig ausgebildet ist und in der Mitte eine kugel- bzw. kreisförmige Erhebung (12) aufweist und die Erhebung (12) oberhalb des Muldenbodens liegt, **dadurch gekennzeichnet, dass** der höchste Punkt der Erhebung (12) unterhalb der Schneidplattenoberseite liegt.

2. Schneidplatte nach Anspruch 1, **gekennzeichnet durch** die Ausbildung als Wendeschneidplatte.

3. Verwendung einer Schneidplatte nach Anspruch 1 oder 2 in einem Schneidwerkzeug.

## Claims

1. A cutting plate having a clamping trough (11), wherein the clamping trough (11) is formed in a circular shape and in the centre has a spherical or circular elevation (12) and the elevation (12) lies above the trough base, **characterised in that** the highest point of the elevation (12) lies below the upper side of the cutting plate.

2. A cutting plate according to claim 1, **characterised by** formation as an indexable cutting plate.

3. Use of a cutting plate according to claim 1 or 2 in a cutting tool.

## Revendications

1. Plaquette de coupe comprenant un creux de serrage (11), ledit creux de serrage (11) étant conformé en cercle et comportant en son centre un bossage (12) sphérique ou circulaire, et ledit bossage (12) se situant au-dessus du fond du creux, **caractérisée par le fait que** le point le plus élevé du bossage (12) est plus bas que la face supérieure de la plaquette de coupe.

2. Plaquette de coupe selon la revendication 1, **caractérisée par le fait qu'**elle est réalisée sous forme de plaquette de coupe amovible.

3. Utilisation d'une plaquette de coupe selon la revendication 1 ou 2 dans un outil de coupe.
